# EUROPEAN PATENT APPLICATION

(11) **EP 2 614 726 A1**
(43) Date of publication of application: **17.07.2013**
(21) Application number: 11823526.6
(22) Date of filing: 05.09.2011
(51) Int. Cl.: A23L 1/212, A23L 1/216, A23L 1/29

(54) **METHOD FOR PRODUCING SOFTENED PLANT MATERIAL**

(30) Priority: 06.09.2010 JP 2010199188
(71) Applicant: En Otsuka Pharmaceutical Co., Ltd., Hanamaki-shi, Iwate 025-0312 (JP)
(72) Inventor: UMENE, Shingo, Hanamaki-shi Iwate 025-0312 (JP)
(74) Representative: Forstmeyer, Dietmar
(86) International application number: PCT/JP2011/070168
(87) International publication number: WO 2012/033051

(57) **Abstract**

Provided are a method for producing highly nutritious, softened plant material that retains the form of the plant material, and softened plant material obtained using said production method. The highly nutritious, softened plant material that retains the form of the plant material is produced by introducing catabolic enzymes so that when the catabolic enzyme is introduced, the plant material and catabolic enzyme are brought into contact and reduced pressure treatment is performed multiple times so that the total time under reduced pressure is less than 12 minutes.

## Description

### TECHNICAL FIELD

The invention relates to a method for producing a softened plant material that is obtained by introducing a degrading enzyme. The invention also relates to a softened plant material obtained by the method.

### BACKGROUND ART

A soft minced food, gooey food, blender food, or the like has been provided for a person who has difficulty in chewing/swallowing, a person who requires nursing care, a patient in the early, middle, or late postoperative stage, an elderly person, or the like, taking account of digestion/absorption, chewing/swallowing, and the like.
Since such a food is produced by finely chopping a cooked food using a kitchen knife or the like, or thickening a cooked food using potato starch, or adding water to a cooked food, and processing the mixture in a blender, such a food has poor appearance in spite of softness.

Various methods that can soften a cooked food or a material without chopping the food or the material using a kitchen knife or the like have been developed in order to produce a food having good appearance. For example, a method that freezes and defrosts a raw or heated material (e.g., carrots or potatoes), immerses the material in a solution containing a pectic enzyme, and introduces the pectic enzyme into the material under reduced pressure to effect an enzyme reaction (see Patent Document 1, for example), and a method that freezes a material (e.g., burdocks or lotus roots) using a quick freezer, and introduces a pectic enzyme or a cellulolytic enzyme into the material to effect an enzyme reaction (see Patent Documents 2 and 3, for example), have been proposed. A method that utilizes vacuum packing when introducing a degrading enzyme has also been proposed (see Patent Document 4, for example).

The material can be softened by the above methods. However, the softness of the softened material is insufficient when the softened material is used as a food material used to produce a food for a person who has difficulty in chewing/swallowing, a person who requires nursing care, a patient in the early, middle, or late postoperative stage, an elderly person, or the like. Moreover, since a variation in softness occurs even if the same type of material is simultaneously subjected to the same treatment, it is impossible to stably mass-produce a softened material. In particular, since a large amount of water is separated from the material, and the nutrients are removed from the material when using a method that immerses the material in a solution containing a degrading enzyme, the resulting softened material has a low nutritional value, is watery, and has a little taste.

The inventors of the invention have made it possible to provide a softened material that has been softened while maintaining the original shape, shows only a small amount of syneresis, and has an excellent texture by reducing the amount of enzyme treatment solution used to soften the material, adding a disaccharide to the enzyme treatment solution, and specifying the degrading enzyme content in the enzyme treatment solution (see Patent Document 5, for example). The inventors have attempted to perform a decompression treatment a plurality of times for introducing the degrading enzyme into the material, and searched a method that prevents syneresis in order to provide a better softened material.

As a method that performs a decompression treatment a plurality of times for introducing the degrading enzyme into the material, a method that immerses an edible leaf vegetable material having soft tissue (e.g., turnip leaf or spinach) in an enzyme treatment solution, and repeats a decompression treatment twice or more has been proposed (see Patent Document 6, for example). However, the above method aims to provide a single-cell material that is used for juice, pasta sauce, or the like, and completely differs from the method according to the invention that aims to obtain a softened material that is highly nutritious and maintains the shape of the material.

### RELATED-ART DOCUMENT

### PATENT DOCUMENT

Patent Document 1: Japanese Patent No. 3686912
Patent Document 2: JP-A-2010-51209
Patent Document 3: WO2008/029783
Patent Document 4: JP-A-2008-11794
Patent Document 5: JP-A-2010-115164
Patent Document 6: JP-A-2010-130984

### SUMMARY OF THE INVENTION

### TECHNICAL PROBLEM

An object of the invention is to provide a method for producing a softened plant material that is highly nutritious, and maintains the shape of the plant material. Another object of the invention is to provide a method for producing a softened plant material that can stably mass-produce a softened plant material having uniform softness. A further object of the invention is to provide a softened plant material obtained by the method.

### SOLUTION TO PROBLEM

The inventors conducted extensive studies in order to achieve the above objects. As a result, the inventors found that a softened plant material that is highly nutritious, and maintains the shape of the plant material can be produced by bringing the plant material into contact with a degrading enzyme, and subjecting the plant material to a decompression treatment a plurality of times so that the total decompression time is less than 12 minutes to introduce the degrading enzyme into the plant material. The inventors also found that syneresis from the plant material can be prevented by heating the softened plant material at a temperature of 70 to 120°C and a humidity of 10 to 100% for 5 to 120 minutes to inactivate the degrading enzyme introduced into the plant material, so that a softened plant material that is highly nutritious, and maintains the shape of the plant material can be produced.
The inventors found that a softened plant material having uniform softness can be stably mass-produced by utilizing a method for producing a softened plant material that is characterized by the above feature(s) and can efficiently and uniformly introduce the degrading enzyme into the plant material.

Several aspects of the invention may provide the following method for producing a softened plant material (see (1) to (13)), softened plant material obtained by the method, and the like.
(1) A method for producing a softened plant material including bringing a plant material into contact with a degrading enzyme, and subjecting the plant material to a decompression treatment a plurality of times so that a total decompression time is less than 12 minutes to introduce the degrading enzyme into the plant material to obtain a softened plant material.
(2) The method according to (1), further including heating the softened plant material at a temperature of 70 to 120°C and a humidity of 10 to 100% for 5 to 120 minutes to inactivate the degrading enzyme.
(3) The method according to (1) or (2), further including freezing the softened plant material.
(4) The method according to any one of (1) to (3), wherein the plant material to be softened is a fresh plant material or a frozen or heated plant material.
(5) The method according to any one of (1) to (4), wherein the degrading enzyme is a degrading enzyme that has at least one of cellulase activity, hemicellulase activity, and pectinase activity.
(6) The method according to any one of (1) to (5), wherein the plant material is brought into contact with the degrading enzyme using an enzyme treatment solution that includes the degrading enzyme in an amount of 2 wt% or more.
(7) The method according to (6), wherein the plant material is brought into contact with the degrading enzyme using the enzyme treatment solution in an amount of 50 wt% or less based on a weight of the plant material.
(8) The method according to (6) or (7), wherein the enzyme treatment solution includes a disaccharide.
(9) The method according to (8), wherein the disaccharide is trehalose.
(10) The method according to any one of (1) to (9), wherein the softened plant material has a compressive stress of less than 2.0×10⁴ N/m² as measured in accordance with "Testing Method for Foods for People with Difficulty in Swallowing" specified in"Approval of Indication of Foods for Special Dietary Use" (Notification No. 0212001, Department of Food Safety, Pharmaceutical and Food Safety Bureau, Ministry of Health, Labour and Welfare of Japan, February 12, 2009).
(11) The method according to (10), wherein a standard deviation of the compressive stress of the softened plant material is 5.0×10³ N/m² or less.
(12) The method according to any one of (1) to (11), wherein a content of each nutrient in the softened plant material is 85% or more based on an original content (=100%) of each nutrient in the plant material.
(13) The method according to any one of (1) to (12), wherein the softened plant material has been softened to have uniform hardness while maintaining an original color and an original shape of the plant material, and containing nutrients originally contained in the plant material.

### ADVANTAGEOUS EFFECTS OF THE INVENTION

Several aspect of the invention thus make it possible to stably mass-produce a softened plant material that maintains the shape of the plant material, is highly nutritious, and has uniform softness. Since the softened plant material obtained according to several aspect of the invention has good appearance, is highly nutritious, and has a good flavor, the softened plant material may effectively used as a food material used to produce a softened food for an elderly person, a food for a postoperative patient, a dysphagia diet, a weaning food, or the like, and makes it possible to stably mass-produce such a food. Since the softened plant material maintains the original color and the original shape of the plant material even when subjected to frozen storage, shows only a small amount of syneresis, and has a soft texture and a good flavor, the softened plant material can be widely distributed and used.

### BRIEF DESCRIPTION OF DRAWINGS

FIG 1 is a view showing photographs of softened carrots (examples and comparative examples).
FIG 2 is a view showing photographs of softened potatoes (examples and comparative examples).
FIG 3 is a view showing photographs of softened burdocks (examples and comparative examples).

### DESCRIPTION OF EMBODIMENTS

The term "softened plant material" used herein refers to an edible plant material (e.g., carrot, potato, or burdock) that has been softened to such an extent that a person who has difficulty in chewing/swallowing, a person who requires nursing care, a patient in the early, middle, or late postoperative stage, an elderly person, a baby, or the like can easily eat the plant material.
A fresh plant material, a frozen plant material, a dried plant material, or the like may be softened using the method according to one embodiment of the invention. A fresh plant material that has been heated and packed in a can or the like, or a plant material that has been heated and dried may also be softened using the method according to one embodiment of the invention.

The plant material that is softened using the method according to one embodiment of the invention is not particularly limited as long as the plant material is edible. Examples of the plant material include leaf and stem vegetables such as broccoli, spinach, cabbage, turnip leaf, rape blossoms, Chinese cabbage, lettuce, onion, cauliflower, common bean, young corn, and bamboo shoot, fruit vegetables such as green pepper, cucumber, pumpkin, eggplant, tomato, zucchini, and paprika, root vegetables such as carrot, Japanese radish, lotus root, and burdock, beans such as pea, soybean, green soybean, and broad bean, potatoes such as sweet potato, potato, and eddoe, fruits such as apple, peach, strawberry, melon, grape, mango, banana, and mandarin orange, mushrooms (fungi) such as shiitake mushroom (*Lentinula edodes*), hen of the Woods (*Grifola frondosa*), king oyster mushroom (*Pleurotus eryngii*), Shimeji mashroom (*Lyophyllum aggregatum*), and mashroom (*Agaricus bisporus*), and the like.

It is preferable that the softened plant material have been softened to have a compressive stress of less than 2.0×10⁴ N/m² (more preferably less than 1.5×10⁴ N/m², and still more preferably less than 1.0×10⁴ N/m²) as measured in accordance with "Testing Method for Foods for People with Difficulty in Swallowing" specified in "Approval of Indication of Foods for Special Dietary Use" (Notification No. 0212001, Department of Food Safety, Pharmaceutical and Food Safety Bureau, Ministry of Health, Labour and Welfare of Japan, February 12, 2009). It is also preferable that the softened plant material have been softened to have uniform hardness while maintaining the original color and the original shape of the plant material, and containing the nutrients originally contained in the plant material.

The expression "maintaining the original color and the original shape of the plant material" used herein means that the softened plant material has a color and a shape similar to those of the plant material, or those of the plant material that has been treated to remove harshness, for example.
The expression "containing the nutrients originally contained in the plant material" used herein means that the plant material that has been treated to remove harshness, and blanched (boiled) at 98°C for 20 seconds, and the softened plant material contain equal amount of respective nutrients, for example. The content of each nutrient in the plant material was equal to that specified in "Standard Tables of Food Composition in Japan, Fifth Revised and Enlarged Edition" (Council for Science and Technology, Ministry of Education, Culture, Sports, Science and Technology of Japan, January 24, 2005).
When expressing the content of each preferable nutrient in the softened plant material using a numerical value, it is preferable that the content of each nutrient in the softened plant material is 85% or more, more preferably 90% or more, and still more preferably 95% or more, based on the original content (=100%) of each nutrient in the plant material.
The expression "softened to have uniform hardness" means that the same type of plant material simultaneously subjected to the softening treatment has been softened uniformly. The expression "softened to have uniform hardness" means that the standard deviation of the compressive stress of the softened plant material is less than 1.0×10⁴ N/m². When the standard deviation of the compressive stress of the softened plant material is less than 5.0×10³ N/m², it is considered that the softened plant material has been softened to have particularly uniform hardness.

The softened plant material according to one embodiment of the invention may be produced by an arbitrary known method as long as the softened plant material can be produced. Note that it is necessary to bring the plant material into contact with the degrading enzyme, and subjecting the plant material to the decompression treatment a plurality of times so that the total decompression time is less than 12 minutes to introduce the degrading enzyme into the plant material.
The degrading enzyme is not particularly limited as long as the degrading enzyme can be used to soften a plant material. Examples of the degrading enzyme include a degrading enzyme that has at least one of cellulase activity, hemicellulase activity, and pectinase activity, and the like. A commercially available product may be used as the degrading enzyme. For example, Hemicellulase Amano 90 (manufactured by Amano Enzyme Inc.) that has cellulase activity and hemicellulase activity, Macerozyme 2A (manufactured by Yakult Pharmaceutical Industry Co., Ltd.) that has pectinase activity, or the like may be used as the degrading enzyme.

The expression "bringing the plant material into contact with the degrading enzyme" used herein means bringing the plant material into contact with the degrading enzyme by coating the plant material with a small amount of an enzyme treatment solution that includes the degrading enzyme, or applying a small amount of an enzyme treatment solution that includes the degrading enzyme to the plant material, for example, without immersing the plant material in an enzyme treatment solution that includes the degrading enzyme. The degrading enzyme is thus spread over the entire surface of the plant material.
The enzyme treatment solution may be prepared by dissolving the degrading enzyme in water, a citrate buffer, an acetate buffer, a phosphate buffer, or the like. The concentration of the degrading enzyme in the enzyme treatment solution is not particularly limited as long as the softened plant material can be produced. It is preferable that the enzyme treatment solution include the degrading enzyme in an amount of 2 wt% or more (more preferably 3.5 to 10.0 wt%).
The enzyme treatment solution may include a disaccharide (e.g., trehalose, sucrose, maltose, or lactose) in addition to the degrading enzyme. The concentration of the disaccharide in the enzyme treatment solution is not particularly limited as long as the softened plant material can be effectively produced. It is preferable that the enzyme treatment solution include the disaccharide in an amount of 5 to 30 wt% (more preferably 20 to 25 wt%).
It suffices to use only a small amount of the enzyme treatment solution when bringing the plant material into contact with the degrading enzyme. For example, the enzyme treatment solution may be used in an amount of 50 wt% or less based on the weight of the plant material. It is preferable to use the enzyme treatment solution in an amount of 5 to 25 wt% based on the weight of the plant material.

After bringing the plant material into contact with the degrading enzyme, the decompression treatment is performed so that the degrading enzyme included in the enzyme treatment solution penetrates into the plant material.
The term "decompression treatment" used herein refers to allow the plant material that has been brought into contact with the degrading enzyme to stand under a reduced pressure of 20 kPa or less, and preferably 10 kPa or less. The decompression treatment may be performed using a known method/system. For example, a diaphragm-type dry vacuum pump "DAU-100H" (manufactured by ULVAC KIKO, Inc.) or the like may be used for the decompression treatment.
It is important to repeat the decompression treatment a plurality of times (e.g., repeat a 1 min decompression treatment 2 to 4 times, or repeat a 30 sec decompression treatment 2 to 9 times) so that the total decompression time is less than 12 minutes. It suffices that the total decompression time be less than 12. For example, the total decompression time may be 1 to 8 minutes (preferably 2 to 4 minutes).

The degrading enzyme that has penetrated into the plant material is allowed to stand at a given temperature for a given time to effect an enzyme reaction, so that the plant material can be softened. The enzyme reaction conditions may be appropriately determined depending on the plant material used to produce a softened plant material. For example, when the plant material is a potato or a carrot, the enzyme reaction may be effected at 4°C for about 12 to 30 hours, followed by allowing the plant material to stand at 45 to 60°C for 20 to 40 minutes. When the plant material is a burdock, the enzyme reaction may be effected at 4°C for about 3 to 30 hours, followed by allowing the plant material to stand at 45 to 60°C for 20 to 40 minutes.

The degrading enzyme is inactivated after reacting the plant material with the degrading enzyme. The degrading enzyme may be inactivated by an arbitrary known method as long as the softened plant material can be produced. It is particularly preferable to inactivate the degrading enzyme by heating the plant material at a temperature of 70 to 120°C and a humidity of 10 to 100% for 5 to 120 minutes using a system (e.g., steam convection oven) that can be adjusted in temperature and humidity.
Water can be removed in the inactivation step. It is possible to remove only unnecessary water from the plant material by heating the plant material in the inactivation step while adjusting humidity in a state in which the surface of the plant material is not dried, and softening of the plant material is not affected.

The softened plant material according to one embodiment of the invention can be produced by the above steps. Note that the scope of the softened plant material according to one embodiment of the invention also includes the softened plant material that has been frozen.
When freezing the softened plant material, it is preferable to rapidly freeze the softened plant material produced by the above steps using a blast freezer "QXF -006SF5" (manufactured by Fukushima Industries Corporation) or the like.
It is preferable to defrost the softened plant material that has been rapidly frozen (or rapidly frozen, and stored in a frozen state) under conditions whereby the softened plant material is uniformly defrosted, and maintains its shape retention capability. For example, it is preferable to defrost the softened plant material at 70 to 80°C for 20 to 40 minutes.

The invention is further described below by way of examples. Note that the invention is not limited to the following examples.

### EXAMPLES

### Material

### 1. Plant material

### 1) Carrot

Carrots that had been sliced to a thickness of about 10 mm, peeled/hulled, and immersed in water to remove harshness were used as the plant material.

### 2) Potato

Potatoes that had been sliced to a thickness of about 10 mm, peeled, and immersed in water to remove harshness were used as the plant material.

### 3) Burdock

Burdocks that had been diagonally sliced to a thickness of about 5 mm, peeled, and immersed in water to remove harshness were used as the plant material.

### 2. Degrading enzyme

Hemicellulase: Hemicellulase Amano 90 (manufactured by Amano Enzyme Inc.)
Pectinase: Macerozyme 2A (manufactured by Yakult Pharmaceutical Industry Co., Ltd.)

### 3. Disaccharide

Disaccharide: Trehalose (manufactured by Hayashibara Co., Ltd.)

### Production of softened plant material

### 1. Production of softened carrots

### Production method (1)

1) The carrots prepared as described above (see "1) Carrot" in "1. Plant material") were heated at 120°C for 10 minutes using a saturated steam cooker.
2) After the addition of an enzyme treatment solution prepared by dissolving trehalose and hemicellulase (5 wt%) in a 0.020 M citrate buffer (pH: 5.0) in an amount of 20 wt% based on the weight of the carrots subjected to the step 1), the carrots were impregnated with the enzyme treatment solution under reduced pressure (-0.095 MPa) (1 min×4 (total decompression time: 4 min) or 2 minx4 (total decompression time: 8 min)). Note that a piece that had been deformed by the step 2) was removed before performing the subsequent step.
3) The carrots subjected to the step 2) were stored in a refrigerator at 4°C for 16 hours, and stored in a temperature-controlled room at 45°C for 30 minutes to effect an enzyme reaction.
4) The carrots subjected to the step 3) were heated at 70°C for 40 minutes using a steam convection oven to inactivate the enzyme, and then frozen rapidly.
5) Softened carrots were thus produced by the steps 1) to 4).

### Production method (2)

Softened carrots were produced by performing the steps 1) and 2) of the production method (1), and then performing the following step 3) instead of the steps 3) to 5) of the production method (1).
3) The carrots subjected to the steps 1) and 2) were stored in a refrigerator at 4°C for 16 hours, heated at a temperature of 90°C and a humidity of 50% for 10 minutes using a steam convection oven to effect an enzyme reaction, enzyme inactivation, and water removal, and then frozen rapidly to obtain softened carrots.

### 2. Production of softened potatoes

### Production method (1)

1) The potatoes prepared as described above (see "1) Potato" in "1. Plant material") were heated at 100°C for 20 minutes using a saturated steam cooker, and then allowed to cool to 50°C.
2) After the addition of an enzyme treatment solution prepared by dissolving trehalose, hemicellulase (5 wt%), and pectinase (5 wt%) in a 0.020 M citrate buffer (pH: 5.0) in an amount of 20 wt% based on the weight of the potatoes subjected to the step 1), the potatoes were impregnated with the enzyme treatment solution under reduced pressure (-0.095 MPa) (1 min×4 (total decompression time: 4 min)). Note that a piece that had been deformed by the step 2) was removed before performing the subsequent step.
3) The potatoes subjected to the step 2) were stored in a refrigerator at 4°C for 16 hours, and stored in a temperature-controlled room at 45°C for 30 minutes to effect an enzyme reaction.
4) The potatoes subjected to the step 3) were heated at 70°C for 40 minutes using a steam convection oven to inactivate the enzyme, and then frozen rapidly.
5) Softened potatoes were thus produced by the steps 1) to 4).

### Production method (2)

Softened potatoes were produced by performing the steps 1) and 2) of the production method (1), and then performing the following step 3) instead of the steps 3) to 5) of the production method (1).
3) The potatoes subjected to the steps 1) and 2) were stored in a refrigerator at 4°C for 16 hours, heated at a temperature of 90°C and a humidity of 50% for 30 minutes using a steam convection oven to effect an enzyme reaction, enzyme inactivation, and water removal, and then frozen rapidly to obtain softened potatoes.

### 3. Production of softened burdocks

### Production method (1)

1) The burdocks prepared as described above (see "1) Burdock" in "1. Plant material") were heated at 120°C for 20 minutes using a saturated steam cooker.
2) After the addition of an enzyme treatment solution prepared by dissolving trehalose and hemicellulase (5 wt%) in a 0.020 M citrate buffer (pH: 5.0) in an amount of 20 wt% based on the weight of the burdocks subjected to the step 1), the burdocks were impregnated with the enzyme treatment solution under reduced pressure (-0.095 MPa) (1 min×4 (total decompression time: 4 min)). Note that a piece that had been deformed by the step 2) was removed before performing the subsequent step.
3) The burdocks subjected to the step 2) were stored in a refrigerator at 4°C for 16 hours, and stored in a temperature-controlled room at 45°C for 30 minutes to effect an enzyme reaction.
4) The burdocks subjected to the step 3) were heated at 70°C for 40 minutes using a steam convection oven to inactivate the enzyme, and then frozen rapidly.
5) Softened burdocks were thus produced by the steps 1) to 4).

### Production method (2)

Softened burdocks were produced by performing the steps 1) and 2) of the production method (1), and then performing the following step 3) instead of the steps 3) to 5) of the production method (1).
3) The burdocks subjected to the steps 1) and 2) were stored in a refrigerator at 4°C for 16 hours, heated at a temperature of 90°C and a humidity of 50% for 10 minutes using a steam convection oven to effect an enzyme reaction, enzyme inactivation, and water removal, and then frozen rapidly to obtain softened burdocks.

### Examples 1 to 8

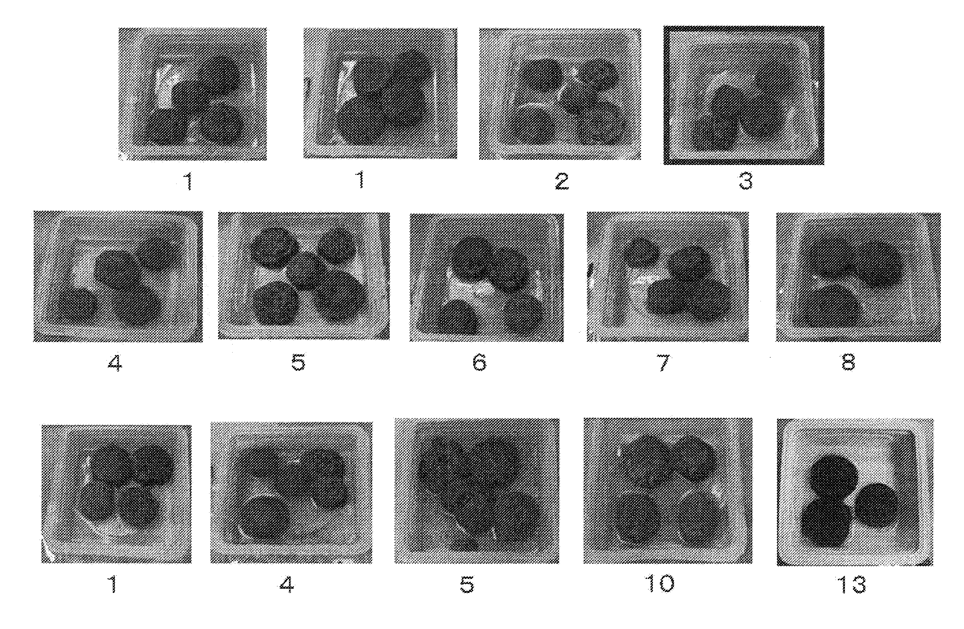

Example 1: Softened carrots were produced by the production method (1) described in "1. Production of softened carrots".
Example 2: Softened carrots were produced by the production method (1) described in "1. Production of softened carrots" using the carrots prepared as described above (see "1) Carrot" in "1. Plant material") and stored in a frozen state (-20°C, about 1 day).
Example 3: Softened carrots were produced in the same manner as in the production method (1) described in "1. Production of softened carrots", except that the carrots were impregnated with the enzyme treatment solution under reduced pressure (-0.095 MPa) for 30 seconds four times (total decompression time: 2 min).
Example 4: Softened carrots were produced by the production method (2) described in "1. Production of softened carrots".
Example 5: Softened carrots were produced by the production method (2) described in "1. Production of softened carrots" using the carrots prepared as described above (see "1) Carrot" in "1. Plant material") and stored in a frozen state (-20°C, about 1 day). Example 6: Softened carrots were produced in the same manner as in the production method (2) described in "1. Production of softened carrots", except that the carrots were heated in the step 3) at a temperature of 90°C and a humidity of 20% using a steam convection oven.
Example 7: Softened carrots were produced in the same manner as in the production method (2) described in "1. Production of softened carrots", except that the carrots were heated in the step 3) at a temperature of 90°C and a humidity of 70% using a steam convection oven.
Example 8: Softened carrots were produced in the same manner as in the production method (2) described in "1. Production of softened carrots", except that the carrots were heated in the step 3) at a temperature of 90°C and a humidity of 100% using a steam convection oven.
Table 1 shows some of the features of the softened carrot production method of each example, and FIG 1 shows photographs of the softened carrots. In FIG. 1, reference sign "1*" indicates a photograph of the softened carrots obtained in Example 1 when the total decompression time was set to 4 minutes, and reference sign "1**" indicates a photograph of the softened carrots obtained in Example 1 when the total decompression time was set to 8 minutes.

### Examples 9 to 16

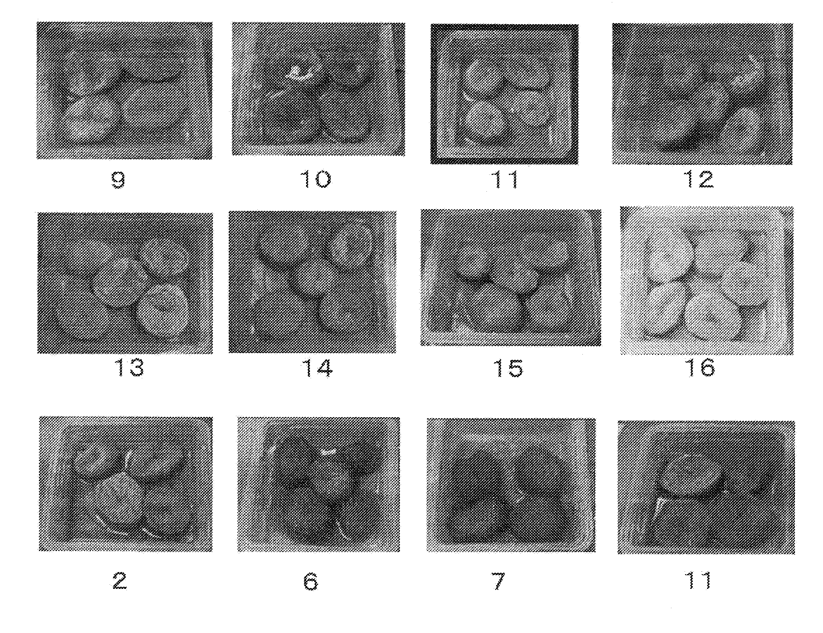

Example 9: Softened potatoes were produced by the production method (1) described in "2. Production of softened potatoes".
Example 10: Softened potatoes were produced by the production method (1) described in "2. Production of softened potatoes" using the potatoes prepared as described above (see "2) Potato" in "1. Plant material") and stored in a frozen state (-20°C, about 1 day). Example 11: Softened potatoes were produced in the same manner as in the production method (1) described in "2. Production of softened potatoes", except that the potatoes were impregnated with the enzyme treatment solution under reduced pressure (-0.095 MPa) for 30 seconds four times (total decompression time: 2 min).
Example 12: Softened potatoes were produced by the production method (2) described in "2. Production of softened potatoes".
Example 13: Softened potatoes were produced by the production method (2) described in "2. Production of softened potatoes" using the potatoes prepared as described above (see "2) Potato" in "1. Plant material") and stored in a frozen state (-20°C, about 1 day). Example 14: Softened potatoes were produced in the same manner as in the production method (2) described in "2. Production of softened potatoes", except that the potatoes were heated in the step 3) at a temperature of 90°C and a humidity of 20% using a steam convection oven.
Example 15: Softened potatoes were produced in the same manner as in the production method (2) described in "2. Production of softened potatoes", except that the potatoes were heated in the step 3) at a temperature of 90°C and a humidity of 70% using a steam convection oven.
Example 16: Softened potatoes were produced in the same manner as in the production method (2) described in "2. Production of softened potatoes", except that the potatoes were heated in the step 3) at a temperature of 90°C and a humidity of 100% using a steam convection oven.
Table 2 shows some of the features of the softened potato production method of each example, and FIG 2 shows photographs of the softened potatoes.]

### Examples 17 to 24

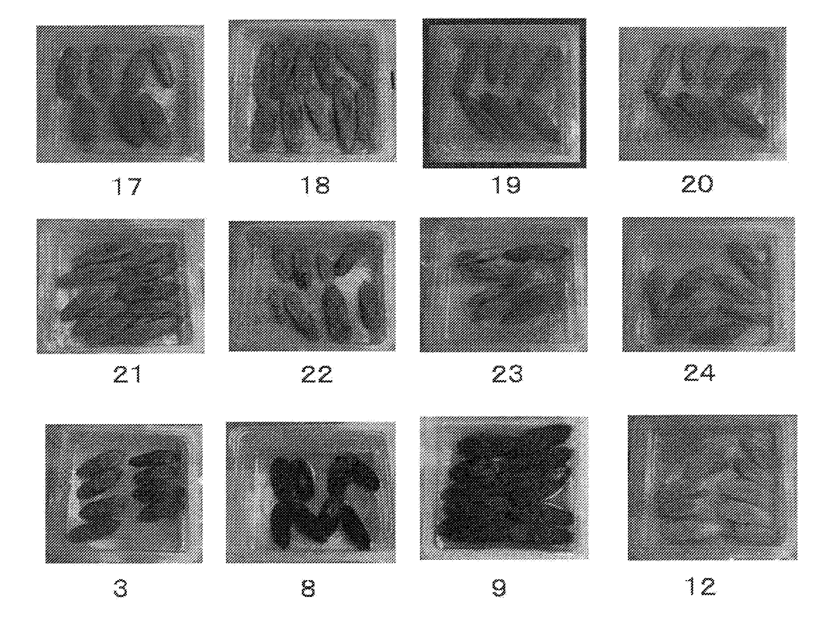

Example 17: Softened burdocks were produced by the production method (1) described in "3. Production of softened burdocks".
Example 18: Softened burdocks were produced by the production method (1) described in "3. Production of softened burdocks" using the burdocks prepared as described above (see "3) Burdock " in "1. Plant material") and stored in a frozen state (-20°C, about 1 day).
Example 19: Softened burdocks were produced in the same manner as in the production method (1) described in "3. Production of softened burdocks", except that the burdocks were impregnated with the enzyme treatment solution under reduced pressure (-0.095 MPa) for 30 seconds four times (total decompression time: 2 min).
Example 20: Softened burdocks were produced by the production method (2) described in "3. Production of softened burdocks".
Example 21: Softened burdocks were produced by the production method (2) described in "3. Production of softened burdocks" using the burdocks prepared as described above (see "3) Burdock " in "1. Plant material") and stored in a frozen state (-20°C, about 1 day).
Example 22: Softened burdocks were produced in the same manner as in the production method (2) described in "3. Production of softened burdocks", except that the burdocks were heated in the step 3) at a temperature of 90°C and a humidity of 20% using a steam convection oven.
Example 23: Softened burdocks were produced in the same manner as in the production method (2) described in "3. Production of softened burdocks", except that the burdocks were heated in the step 3) at a temperature of 90°C and a humidity of 70% using a steam convection oven.
Example 24: Softened burdocks were produced in the same manner as in the production method (2) described in "3. Production of softened burdocks", except that the burdocks were heated in the step 3) at a temperature of 90°C and a humidity of 100% using a steam convection oven.
Table 3 shows some of the features of the softened burdock production method of each example, and FIG 3 shows photographs of the softened burdocks.

### Comparative Examples 1 to 3

### Comparison of enzyme treatment solution impregnation conditions

Comparative Example 1: Softened carrots were produced in the same manner as in the production method (1) described in "1. Production of softened carrots", except that the carrots were impregnated with the enzyme treatment solution under reduced pressure (-0.095 MPa) for 2 minutes six times (total decompression time: 12 min).
Comparative Example 2: Softened potatoes were produced in the same manner as in the production method (1) described in "2. Production of softened potatoes", except that the potatoes were impregnated with the enzyme treatment solution under reduced pressure (-0.095 MPa) for 2 minutes six times (total decompression time: 12 min).
Comparative Example 3: Softened burdocks were produced in the same manner as in the production method (1) described in "3. Production of softened burdocks", except that the burdocks were impregnated with the enzyme treatment solution under reduced pressure (-0.095 MPa) for 2 minutes six times (total decompression time: 12 min).

### Comparative Examples 4 to 9

### Comparison (1) with related art

Comparative Example 4: The carrots prepared as described above (see "1) Carrot" in "1. Plant material") were treated using the method disclosed in Japanese Patent No. 3686912 ("Method for rapidly introducing enzyme into plant tissue").
   Specifically, the carrots were blanched (boiled) at 98°C for 20 seconds, frozen at -15°C, immersed (defrosted) in an enzyme treatment solution (40°C) prepared by dissolving hemicellulase (1 wt%) in a 0.020 M citrate buffer (pH: 5.0) for 60 minutes (amount of enzyme treatment solution: 250 wt% based on weight of carrots), and decompressed (-0.095 MPa) for 5 minutes using a vacuum pump.
   The carrots were heated at 70°C for 40 minutes using a steam convection oven to inactivate the enzyme, and then frozen rapidly.
Comparative Example 5: The carrots were treated in the same manner as in
Comparative Example 4, except that the blanched carrots were not frozen.

Comparative Example 6: The potatoes prepared as described above (see "2) Potato" in "1. Plant material") were treated using the method disclosed in Japanese Patent No. 3686912 ("Method for rapidly introducing enzyme into plant tissue").
   Specifically, the potatoes were blanched (boiled) at 98°C for 20 seconds, frozen at -15°C, immersed (defrosted) in an enzyme treatment solution (40°C) prepared by dissolving hemicellulase (1 wt%) and pectinase (1 wt%) in a 0.020 M citrate buffer (pH: 5.0) for 60 minutes (amount of enzyme treatment solution: 250 wt% based on weight of potatoes), and decompressed (-0.095 MPa) for 5 minutes using a vacuum pump.
   The potatoes were heated at 70°C for 40 minutes using a steam convection oven to inactivate the enzyme, and then frozen rapidly.
Comparative Example 7: The potatoes were treated in the same manner as in
Comparative Example 6, except that the blanched potatoes were not frozen.

Comparative Example 8: The burdocks prepared as described above (see "3) Burdock" in "1. Plant material") were treated using the method disclosed in Japanese Patent No. 3686912 ("Method for rapidly introducing enzyme into plant tissue").
   Specifically, the burdocks were blanched (boiled) at 98°C for 20 seconds, frozen at -15°C, immersed (defrosted) in an enzyme treatment solution (40°C) prepared by dissolving hemicellulase (1 wt%) in a 0.020 M citrate buffer (pH: 5.0) for 60 minutes (amount of enzyme treatment solution: 250 wt% based on weight of burdocks), and decompressed (-0.095 MPa) for 5 minutes using a vacuum pump.
   The burdocks were heated at 70°C for 40 minutes using a steam convection oven to inactivate the enzyme, and then frozen rapidly.
Comparative Example 9: The burdocks were treated in the same manner as in
Comparative Example 8, except that the blanched burdocks were not frozen.

### Comparative Examples 10 to 12

### Comparison (2) with related art

Comparative Example 10: Carrots (plant material) were treated using the method disclosed in JP-A-2010-51209 ("Method for producing frozen soft vegetable food").
   1) The carrots were sliced to a thickness of about 10 mm, peeled/hulled, and immersed in water to remove harshness.
   2) The carrots subjected to the step 1) were immersed in water (8-fold volume), and heated at 90°C for 30 minutes.
   3) The carrots subjected to the step 2) were removed from the water, cooled with water, and frozen at -20°C for 40 minutes using a quick freezer to produce ice crystals in the tissue of the carrots. Next, cold air (-20°C) was applied to the surface of the carrots for 48 hours to reduce the water content in the surface of the carrots in a frozen state.
      A degrading enzyme easily enters the tissue of the carrots as a result of performing the above operation.
   4) The carrots subjected to the step 3) were defrosted, immersed in an enzyme treatment solution prepared by dissolving hemicellulase (1 wt%) in a 0.020 M citrate buffer (pH: 5.0) in an amount of 250 wt% based on the weight of the carrots, and decompressed at -0.095 MPa for 20 minutes.
   5) The carrots subjected to the step 4) were returned to normal pressure, removed from the enzyme treatment solution, and stored in a refrigerator at 10°C for 16 hours.
   6) The carrots subjected to the step 5) were immersed in water (3-fold volume), and heated at 95°C for 10 minutes to inactivate the enzyme.
   7) The carrots subjected to the step 6) were cooled under vacuum, and frozen at -40°C for 30 minutes.

Comparative Example 11: Potatoes (plant material) were treated using the method disclosed in JP-A-2010-51209 ("Method for producing frozen soft vegetable food").
   1) The potatoes were sliced to a thickness of about 10 mm, peeled, and immersed in water to remove harshness.
   2) The potatoes subjected to the step 1) were immersed in water (8-fold volume), and heated at 90°C for 30 minutes.
   3) The potatoes subjected to the step 2) were removed from the water, cooled with water, and frozen at -20°C for 40 minutes using a quick freezer to produce ice crystals in the tissue of the potatoes. Next, cold air (-20°C) was applied to the surface of the potatoes for 48 hours to reduce the water content in the surface of the potatoes in a frozen state. A degrading enzyme easily enters the tissue of the potatoes as a result of performing the above operation.
   4) The potatoes subjected to the step 3) were defrosted, immersed in an enzyme treatment solution prepared by dissolving hemicellulase (1 wt%) and pectinase (1 wt%) in a 0.020 M citrate buffer (pH: 5.0) in an amount of 250 wt% based on the weight of the potatoes, and decompressed at -0.095 MPa for 20 minutes.
   5) The potatoes subjected to the step 4) were returned to normal pressure, removed from the enzyme treatment solution, and stored in a refrigerator at 10°C for 16 hours.
   6) The potatoes subjected to the step 5) were immersed in water (3-fold volume), and heated at 95°C for 10 minutes to inactivate the enzyme.
   7) The potatoes subjected to the step 6) were cooled under vacuum, and frozen at -40°C for 30 minutes.

Comparative Example 12: Burdocks (plant material) were treated using the method disclosed in JP-A-2010-51209 ("Method for producing frozen soft vegetable food").
   1) The burdocks were washed with water, peeled, and diagonally sliced to a thickness of about 5 mm.
   2) The burdocks subjected to the step 1) were immersed in water (8-fold volume), and heated at 90°C for 30 minutes.
   3) The burdocks subjected to the step 2) were removed from the water, cooled with water, and frozen at -20°C for 40 minutes using a quick freezer to produce ice crystals in the tissue of the burdocks. Next, cold air (-20°C) was applied to the surface of the burdocks for 48 hours to reduce the water content in the surface of the burdocks in a frozen state. A degrading enzyme easily enters the tissue of the burdocks as a result of performing the above operation.
   4) The burdocks subjected to the step 3) were defrosted, immersed in an enzyme treatment solution prepared by dissolving hemicellulase (1 wt%) in a 0.020 M citrate buffer (pH: 5.0) in an amount of 250 wt% based on the weight of the burdocks, and decompressed at -0.095 MPa for 20 minutes.
   5) The burdocks subjected to the step 4) were returned to normal pressure, removed from the enzyme treatment solution, and stored in a refrigerator at 10°C for 16 hours.
   6) The burdocks subjected to the step 5) were immersed in water (3-fold volume), and heated at 95°C for 10 minutes to inactivate the enzyme.
   7) The burdocks subjected to the step 6) were cooled under vacuum, and frozen at -40°C for 30 minutes.

Comparative Example 13: The carrots prepared as described above (see "1) Carrot" in "1. Plant material") were boiled at 90°C for 6 hours.

Table 1 shows some of the features of the softened carrot production method of each comparative example, Table 2 shows some of the features of the softened potato production method of each comparative example, and Table 3 shows some of the features of the softened burdock production method of each comparative example. FIG 1 shows photographs of the softened carrots obtained in each comparative example, FIG 2 shows photographs of the softened potatoes obtained in each comparative example, and FIG 3 shows photographs of the softened burdocks obtained in each comparative example.

**TABLE 1**

| Features of softened carrot production method | | | | | | | |
|---|---|---|---|---|---|---|---|
| | No. | Enzyme concentration | Amount of enzyme solution | State during impregnation | Decompression conditions | Total decompression time | Humidity during heating |
| Example | 1 | 5% | 20.0% | 1 mm or less from liquid level | 1min×4 | 4min | - |
| | | 5% | 20.0% | 1 mm or less from liquid level | 2min×4 | 8min | - |
| | 2 | 5% | 20.0% | 1 mm or less from liquid level | 1min×4 | 4min | - |
| | 3 | 5% | 20.0% | 1 mm or less from liquid level | 30sec×4 | 2min | - |
| | 4 | 5% | 20.0% | 1 mm or less from liquid level | 1min×4 | 4min | Humidity 50% |
| | 5 | 5% | 20.0% | 1 mm or less from liquid level | 1min×4 | 4min | Humidity 50% |
| | 6 | 5% | 20.0% | 1 mm or less from liquid level | 1min×4 | 4min | Humidity 20% |
| | 7 | 5% | 20.0% | 1 mm or less from liquid level | 1min×4 | 4min | Humidity 70% |
| | 8 | 5% | 20.0% | 1 mm or less from liquid level | 1min×4 | 4min | Humidity 100% |
| Comparative Example | 1 | 5% | 20.0% | 1 mm or less from liquid level | 2minx6 | 12min | - |
| | 4 | 1% | 250.0% | In liquid | 5min | 5min | - |
| | 5 | 1% | 250.0% | In liquid | 5min | 5min | - |
| | 10 | 1% | 250.0% | In liquid | 20min | 20min | - |
| | 13 | 0% | 0% | - | - | - | - |

**TABLE 2**

| Features of softened potato production method | | | | | | | |
|---|---|---|---|---|---|---|---|
| | No. | Enzyme concentration | Amount of enzyme solution | State during impregnation | Decompression conditions | Total decompression time | Humidity during heating |
| Example | 9 | 5% | 20.0% | 1 mm or less from liquid level | 1min×4 | 4min | - |
| | 10 | 5% | 20.0% | 1 mm or less from liquid level | 1min×4 | 4min | - |
| | 11 | 5% | 20.0% | 1 mm or less from liquid level | 30sec×4 | 2min | - |
| | 12 | 5% | 20.0% | 1 mm or less from liquid level | 1min×4 | 4min | Humidity 50% |
| | 13 | 5% | 20.0% | 1 mm or less from liquid level | 1min×4 | 4min | Humidity 50% |
| | 14 | 5% | 20.0% | 1 mm or less from liquid level | 1min×4 | 4min | Humidity 20% |
| | 15 | 5% | 20.0% | 1 mm or less from liquid level | 1min×4 | 4min | Humidity 70% |
| | 16 | 5% | 20.0% | 1 mm or less from liquid level | 1min×4 | 4min | Humidity 100% |
| Comparative Example | 2 | 5% | 20.0% | 1 mm or less from liquid level | 2min×6 | 12min | - |
| | 6 | 1% | 250.0% | In liquid | 5min | 5min | - |
| | 7 | 1% | 250.0% | In liquid | 5min | 5min | - |
| | 11 | 1% | 250.0% | In liquid | 20min | 20min | - |

**TABLE 3**

| Features of softened burdock production method | | | | | | | |
|---|---|---|---|---|---|---|---|
| | No. | Enzyme concentration | Amount of enzyme solution | State during impregnation | Decompression conditions | Total decompression time | Humidity during heating |
| Example | 17 | 5% | 20.0% | 1 mm or less from liquid level | 1min×4 | 4min | - |
| | 18 | 5% | 20.0% | 1 mm or less from liquid level | 1min×4 | 4min | - |
| | 19 | 5% | 20.0% | 1 mm or less from liquid level | 30sec×4 | 2min | - |
| | 20 | 5% | 20.0% | 1 mm or less from liquid level | 1min×4 | 4min | Humidity 50% |
| | 21 | 5% | 20.0% | 1 mm or less | 1min×4 | 4min | Humidity |
| | | | | from liquid level | | | 50% |
| | 22 | 5% | 20.0% | 1 mm or less from liquid level | 1min×4 | 4min | Humidity 20% |
| | 23 | 5% | 20.0% | 1 mm or less from liquid level | 1min×4 | 4min | Humidity 70% |
| | 24 | 5% | 20.0% | 1 mm or less from liquid level | 1min×4 | 4min | Humidity 100% |
| Comparative Example | 3 | 5% | 20.0% | 1 mm or less from liquid level | 2min×6 | 12min | - |
| | 8 | 1% | 250.0% | In liquid | 5min | 5min | - |
| | 9 | 1% | 250.0% | In liquid | 5min | 5min | - |
| | 12 | 1% | 250.0% | In liquid | 20min | 20min | - |

### Evaluation of softened plant material

The softened carrots, potatoes, and burdocks obtained in Examples 1 to 24, and the carrots, potatoes, and burdocks subjected to the softening treatment in Comparative Examples 1 to 13 were defrosted (80°C, 30 minutes), and evaluated as described below. The softened carrots and potatoes that were stored in a frozen state (see "Frozen storage test of softened plant material") were also defrosted (80°C, 30 minutes), and evaluated as described below.
Tables 6 and 7 show the evaluation results for the softened carrots, Tables 8 and 9 show the evaluation results for the softened potatoes, and Tables 10 and 11 show the evaluation results for the softened burdocks. Tables 12 and 13 show the evaluation results for the softened carrots and potatoes that were stored in a frozen state.

### 1. Breakage rate

The ratio of the number of pieces of the plant material that were deformed and removed after impregnation with the enzyme treatment solution to the number of pieces of the plant material (50 or more) subjected to the softening treatment in the step 2 of each example was calculated, and taken as the breakage rate.

### 2. Sensory evaluation (n=10)

The appearance (color and shape), syneresis, the texture (hardness), and the flavor of the softened plant material were evaluated in five levels.
A softened plant material that maintains the original appearance (color and shape), and has been softened to such an extent that the softened plant material can be crushed with the tongue (i.e., only the texture (hardness) has been changed) was considered to be an ideal food material model. Specific criteria are shown in Table 4.

### Five-level evaluation

S: The softened plant material is in a state equal to that of the ideal model, and is suitable for use as a food material.
A: The softened plant material is in a state almost equal to that of the ideal model, and is suitable for use as a food material.
B: The softened plant material is in a state inferior to that of the ideal model, but is suitable for use as a food material.
C: The softened plant material is in a state slightly similar to that of the ideal model, but is not suitable for use as a food material.
D: The softened plant material is in a state differing from that of the ideal model, and is not suitable for use as a food material.
1 point was assigned to the level D, 2 points were assigned to the level C, 3 points were assigned to the level B, 4 points were assigned to the level A, 5 points were assigned to the level S, and the average value of the evaluation points rated by ten raters was calculated, and taken as the overall evaluation result (1.0 to 1.4 points: D, 1.5 to 2.4 points: C, 2.5 to 3.4 points: B, 3.5 to 4.4 points: A, 4.5 to 5.0 points: S).

**TABLE 4**

| Criteria | | | | |
|---|---|---|---|---|
| Criteria | Appearance (color and shape) | Syneresis | Texture (hardness) | Flavor |
| D | Significant discoloration/breakage is observed | Wetted due to significant syneresis | Hard and must be chewed | Has only off-flavor |
| C | Some discoloration/breakage is observed | Wetted due to significant syneresis | Partially cannot be crushed with tongue | Has strong off-flavor |
| B | Slight breakage is observed | Seasoning can be added without problem | Can be unevenly crushed with tongue | Has original flavor of plant material with off-flavor |
| A | Color and shape are good | Slight syneresis is observed | Can be evenly crushed with tongue | Has sufficient original flavor of plant material |
| S | Original appearance is maintained | No | Can be easily crushed with tongue | Has same flavor as original flavor of plant material |

### 3. Measurement of hardness

The hardness of the softened plant material was measured using a creep meter "RE2-33005B" (manufactured by Yamaden Co., Ltd.) (measurement speed: 10mm/s, diameter of plunger: 20 mm, and temperature: 20±24°C). The hardness of the softened plant material was measured in accordance with "Testing Method for Foods for People with Difficulty in Swallowing" specified in "Approval of Indication of Foods for Special Dietary Use" (Notification No. 0212001, Department of Food Safety, Pharmaceutical and Food Safety Bureau, Ministry of Health, Labour and Welfare of Japan, February 12, 2009). The hardness of the softened plant material (10 pieces) obtained in each example was measured, and the average value and the standard deviation were evaluated in three levels. The criteria are shown in Table 5.

**TABLE 5**

| Hardness criteria | | | | |
|---|---|---|---|---|
| Plant material | Criteria | ○ | Δ | × |
| Carrot | Average value | Less than 7.0×10³N/m² | 7.0×10³N/m² or more Less than 2.0×10⁴N/m² | 2.0×10⁴N/m² or more |
| | Standard deviation | Less than 5.0×10³N/m² | 5.0×0³N/m² or more Less than 1.0×10⁴N/m² | 1.0×10⁴N/m² or more |
| Potato | Average value | Less than 1.5×10⁴N/m² | 1.5×10⁴N/m² or more Less than 2.0×10⁴N/m² | 2.0×10⁴N/m² or more |
| | Standard deviation | Less than 5.0×10³N/m² | 5.0×10³N/m² or more Less than 1.0×10⁴N/m² | 1.0x10⁴N/m² or more |
| Burdock | Average value | Less than 1.0×10⁴N/m² | 1.0×10⁴N/m² or more Less than 2.0×10⁴N/m | 2.0×10⁴N/m² or more |
| | Standard deviation | Less than 5.0×10³N/m² | 5.0×10³N/m² or more Less than 1.0×10⁴N/m² | 1.0×10⁴N/m² or more |

### 4. Nutritional analysis

The water content, the protein content, the lipid content, and the ash content in each softened plant material (100 g (edible part)) were measured by a normal-pressure heating/drying method, the Kjeldahl method, an acid digestion method, and a direct ashing method, respectively, and the carbohydrate content and the calorie were calculated from the resulting values. The potassium content was measured by atomic absorption spectrophotometry. The β-carotene content in the softened carrots (100 g (edible part)) was measured by high-performance liquid chromatography.
The carrots, potatoes, and burdocks prepared as described above (see "1) Carrot", "2) Potato", and "3) Burdock" in "1. Plant material") were blanched (boiled) at 98°C for 20 seconds. The content of each nutrient in each plant material (i.e., the nutrients originally contained in each plant material (100%)) was compared with that of each softened plant material to determine the retention rate of each nutrient. The content of each nutrient specified in "Standard Tables of Food Composition in Japan, Fifth Revised and Enlarged Edition" (Council for Science and Technology, Ministry of Education, Culture, Sports, Science and Technology of Japan, January 24, 2005) is shown in Tables 7, 9, and 11 for reference.

**TABLE 6**

| Softened carrot evaluation results (breakage rate, sensory evaluation, and hardness) | | | | | | | | | |
|---|---|---|---|---|---|---|---|---|---|
| | No. | Breakage rate | Sensory evaluation | | | | | Hardness | |
| | | | Appearance | Syneresis | Texture | Flavor | Overall evaluation | Average value | Standard deviation |
| Example | 1 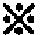 | 1.9% | A | A | A | B | A | ○ | ○ |
| | 1 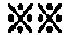 | 4.0% | A | B | A | B | B | ○ | ○ |
| | 2 | 2.5% | C | B | A | B | B | ○ | ○ |
| | 3 | 1.2% | A | A | A | B | A | ○ | ○ |
| | 4 | 0.0% | A | S | A | A | S | ○ | ○ |
| | 5 | 2.0% | B | S | A | A | S | ○ | ○ |
| | 6 | 1.4% | B | S | A | A | S | ○ | ○ |
| | 7 | 2.0% | A | A | A | A | A | ○ | ○ |
| | 8 | 1.4% | A | A | A | B | A | ○ | ○ |
| Comparative Example | 1 | 6.6% | A | B | A | B | B | ○ | ○ |
| | 4 | 16.1% | B | D | D | C | D | × | × |
| | 5 | 19.3% | D | D | D | C | D | × | × |
| | 10 | 17.0% | C | D | B | C | C | Δ | ○ |
| | 13 | - | D | D | D | D | D | Δ | ○ |

| | | | | | | | | | |
|---|---|---|---|---|---|---|---|---|---|
| 1*: Evaluation results when the total decompression time was 4 minutes in Example 1 1**: Evaluation results when the total decompression time was 8 minutes in Example 1 | | | | | | | | | |

**TABLE 7**

| Softened carrot evaluation results (nutritional analysis) | | | | | | | | | | | | | |
|---|---|---|---|---|---|---|---|---|---|---|---|---|---|
| | No. | Water (g) | | Protein (g) | | Carbohydrate (g) | | Calorie (kcal) | | Potassium (mg) | | β-carotene (µg) | |
| Reference | | 89.5 | - | 0.6 | - | 9.2 | - | 40 | - | 235 | - | 7660 | |
| Standard* | | 89.1 | - | 0.6 | - | 9.6 | - | 39 | - | 240 | - | 7500 | - |
| Example | 1 | 87.7 | 98.0% | 0.9 | 150.0% | 10.5 | 114.1% | 48 | 120.0% | 245 | 104.3% | 7970 | 104.0% |
| | 2 | 88.4 | 98.8% | 0.9 | 150.0% | 9.9 | 107.6% | 45 | 112.5% | 217 | 92.3% | - | - |
| | 4 | 87.5 | 97.8% | 0.9 | 150.0% | 10.8 | 117.4% | 49 | 122.5% | 229 | 97.4% | 9430 | 123.1% |
| | 5 | 88.1 | 98.4% | 0.9 | 150.0% | 10.2 | 110.9% | 46 | 115.0% | 221 | 94.0% | - | - |
| Comparativ e Example | 1 | 88.3 | 98.7% | 0.9 | 150.0% | 10 | 108.7% | 45 | 112.5% | 219 | 93.2% | 7800 | 101.8% |
| | 4 | 93.7 | 104.7% | 0.5 | 83.3% | 5.3 | 57.6% | 25 | 62.5% | 122 | 51.9% | 6450 | 84.2% |
| | 10 | 93.4 | 104.4% | 0.5 | 83.3% | 5.6 | 60.9% | 26 | 65.0% | 125 | 53.2% | 6760 | 88.3% |
| | 13 | 97.6 | 109.1% | 0.3 | 50.0% | 1.8 | 19.6% | 10 | 25.0% | 8.8 | 3.7% | 7810 | 102.0% |

| | | | | | | | | | | | | | |
|---|---|---|---|---|---|---|---|---|---|---|---|---|---|
| *: Nutrients contained in carrots (peeled and boiled) (100 g (edible part)) specified in Standard Tables of Food Composition in Japan, Fifth Revised and Enlarged Edition | | | | | | | | | | | | | |

**TABLE 8**

| Softened potato evaluation results (breakage rate, sensory evaluation, and hardness) | | | | | | | | | |
|---|---|---|---|---|---|---|---|---|---|
| | No. | Breakage rate | Sensory evaluation | | | | | Hardness | |
| | | | Appearance | Syneresis | Texture | Flavor | Overall evaluation | Average value | Standard deviation |
| Example | 9 | 2.3% | A | B | A | B | B | ○ | ○ |
| | 10 | 3.9% | C | C | A | B | B | ○ | ○ |
| | 11 | 1.2% | A | B | A | B | B | ○ | ○ |
| | 12 | 2.5% | A | S | A | A | S | ○ | ○ |
| | 13 | 2.8% | A | S | A | A | S | ○ | ○ |
| | 14 | 1.0% | B | S | A | A | S | ○ | ○ |
| | 15 | 1.6% | A | A | A | A | A | ○ | ○ |
| | 16 | 1.3% | A | B | A | B | B | ○ | ○ |
| Comparative Example | 2 | 8.0% | A | C | A | B | B | ○ | ○ |
| | 6 | 21.4% | D | D | D | D | D | × | × |
| | 7 | 23.6% | D | B | D | D | D | × | Δ |
| | 11 | 19.6% | C | D | B | C | C | Δ | Δ |

**TABLE 9**

| Softened potato evaluation results (nutritional analysis) | | | | | | | | | | | |
|---|---|---|---|---|---|---|---|---|---|---|---|
| | No. | Water (g) | | Protein(g) | | Carbohydrate (g) | | Calorie (kcal) | | Potassium (mg) | |
| Reference | | 78.0 | - | 1.4 | - | 19.9 | - | 86 | - | 340 | - |
| Standard* | | 78.1 | - | 1.5 | - | 19.7 | - | 84 | - | 330 | - |
| Example | 9 | 76.6 | 98.2% | 1.3 | 92.9% | 21.2 | 106.5% | 91 | 105.8% | 323 | 95.0% |
| | 10 | 77.3 | 99.1% | 1.3 | 92.9% | 20.5 | 103.0% | 88 | 102.3% | 305 | 89.7% |
| | 12 | 75.5 | 96.8% | 1.3 | 92.9% | 22.2 | 111.6% | 95 | 110.5% | 362 | 106.5% |
| | 13 | 76.2 | 97.7% | 1.3 | 92.9% | 21.5 | 108.0% | 92 | 107.0% | 317 | 93.2% |
| Comparative Example | 2 | 76.8 | 98.5% | 1.3 | 92.9% | 21.0 | 105.5% | 90 | 104.7% | 306 | 90.0% |
| | 5 | 77.8 | 99.7% | 0.9 | 64.3% | 20.6 | 103.5% | 88 | 102.3% | 195 | 57.4% |
| | 11 | 78.0 | 100.0% | 0.9 | 64.3% | 20.5 | 103.0% | 87 | 101.2% | 203 | 59.7% |

| | | | | | | | | | | | |
|---|---|---|---|---|---|---|---|---|---|---|---|
| *: Nutrients contained in potatoes (stem tuber, boiled) (100 g (edible part)) specified in Standard Tables of Food Composition in Japan, Fifth Revised and Enlarged Edition | | | | | | | | | | | |

**TABLE 10**

| Softened burdock evaluation results (breakage rate, sensory evaluation, and hardness) | | | | | | | | | |
|---|---|---|---|---|---|---|---|---|---|
| | No. | Breakage rate | Sensory evaluation | | | | | Hardness | |
| | | | Appearance | Syneresis | Texture | Flavor | Overall evaluation | Average value | Standard deviation |
| Example | 17 | 0.9% | A | A | A | B | A | ○ | ○ |
| | 18 | 1.2% | A | A | A | B | A | ○ | ○ |
| | 19 | 0.0% | A | A | A | B | A | ○ | ○ |
| | 20 | 1.2% | A | S | A | A | S | ○ | ○ |
| | 21 | 2.2% | A | S | A | A | S | ○ | ○ |
| | 22 | 0.0% | A | S | A | A | S | ○ | ○ |
| | 23 | 0.9% | A | S | A | A | S | ○ | ○ |
| | 24 | 0.0% | A | S | A | A | S | ○ | ○ |
| Comparative Example | 3 | 5.7% | B | A | A | B | B | ○ | ○ |
| | 8 | 15.1% | D | D | D | D | D | × | Δ |
| | 9 | 17.3% | D | D | D | D | D | × | ○ |
| | 12 | 18.2% | C | B | D | C | C | Δ | ○ |

**TABLE 11**

| Softened burdock evaluation results (nutritional analysis) | | | | | | | | | | | |
|---|---|---|---|---|---|---|---|---|---|---|---|
| | No. | Water (g) | | Protein(g) | | Carbohydrate (g) | | Calorie (kcal) | | Potassium (mg) | |
| Reference | | 85 | - | 1.5 | - | 12.7 | - | 59 | - | 211 | - |
| Standard* | | 83.9 | - | 1.5 | - | 13.7 | - | 58 | - | 210 | - |
| Example | 17 | 80.4 | 94.6% | 2.0 | 133.3% | 16.8 | 132.3% | 77 | 130.5% | 193 | 91.5% |
| | 18 | 81.5 | 95.9% | 2.0 | 133.3% | 15.7 | 123.6% | 73 | 123.7% | 187 | 88.6% |
| | 20 | 81.1 | 95.4% | 2.1 | 140.0% | 16.0 | 126.0% | 74 | 125.4% | 204 | 96.7% |
| | 21 | 81.2 | 95.5% | 2.0 | 133.3% | 16.0 | 126.0% | 74 | 125.4% | 195 | 92.4% |
| Comparative Example | 3 | 81.8 | 96.2% | 2.0 | 133.3% | 15.4 | 121.3% | 71 | 120.3% | 189 | 89.6% |
| | 6 | 93.7 | 110.2% | 0.9 | 60.0% | 4.9 | 38.6% | 24 | 40.7% | 62 | 29.4% |
| | 12 | 92.0 | 108.2% | 0.9 | 60.0% | 6.6 | 52.0% | 31 | 52.5% | 66 | 31.3% |

| | | | | | | | | | | | |
|---|---|---|---|---|---|---|---|---|---|---|---|
| *: Nutrients contained in burdocks (root, boiled) (100 g (edible part)) specified in Standard Tables of Food Composition in Japan, Fifth Revised and Enlarged Edition | | | | | | | | | | | |

### Softened plant material frozen storage test

A softened plant material produced as described above was frozen rapidly using a blast freezer "QXF-006SF5" (manufactured by Fukushima Industries Corporation), and stored in a frozen state (-20°C). After storing the softened plant material for a given period, the softened plant material after frozen storage was evaluated in accordance with the evaluation methods and the criteria described in "Evaluation of softened plant material".
Table 12 shows the evaluation results for the softened carrots (that were produced in the same manner as in Example 1 (total decompression time: 4 minutes) or Example 4) after frozen storage, and Table 13 shows the evaluation results for the softened potatoes (that were produced in the same manner as in Example 9 or Example 12) after frozen storage. As shown in Tables 12 and 13, each softened plant material after frozen storage showed sensory evaluation results and hardness equal to those immediately after production (storage period: 0 months), and was suitable for use as a food material. The softened plant material showed discoloration to some extent after 6-month frozen storage, but had excellent color and an excellent shape (evaluation: A), and was suitable for use as a food material.

**TABLE 12**

| Softened carrot evaluation results (sensory evaluation and hardness) after frozen storage | | | | | | | | |
|---|---|---|---|---|---|---|---|---|
| | Storage period | Sensory evaluation | | | | | Hardness | |
| | | Appearance | Syneresis | Texture | Flavor | Overall evaluation | Average value | Standard deviation |
| Example 1 | 0 months | A | A | A | B | A | ○ | ○ |
| | 1 months | A | A | A | B | A | ○ | ○ |
| | 2 months | A | A | A | B | A | ○ | ○ |
| | 4 months | A | A | A | B | A | ○ | ○ |
| | 6 months | A | A | A | B | A | ○ | ○ |
| Example 4 | 0 months | A | S | A | A | S | ○ | ○ |
| | 1 months | A | S | A | A | S | ○ | ○ |
| | 2 months | A | S | A | A | S | ○ | ○ |
| | 4 months | A | S | A | A | S | ○ | ○ |
| | 6 months | A | S | A | A | S | ○ | ○ |

**TABLE 13**

| Softened potato evaluation results (sensory evaluation and hardness) after frozen storage | | | | | | | | |
|---|---|---|---|---|---|---|---|---|
| | Storage period | Sensory evaluation | | | | | Hardness | |
| | | Appearance | Syneresis | Texture | Flavor | Overall evaluation | Average value | Standard deviation |
| Example 9 | 0 months | A | B | A | B | B | ○ | ○ |
| | 1 months | A | B | A | B | B | ○ | ○ |
| | 2 months | A | B | A | B | B | ○ | ○ |
| | 4 months | A | B | A | B | B | ○ | ○ |
| | 6 months | A | B | A | B | B | ○ | ○ |
| Example 12 | 0 months | A | S | A | A | S | ○ | ○ |
| | 1 months | A | S | A | A | S | ○ | ○ |
| | 2 months | A | S | A | A | S | ○ | ○ |
| | 4 months | A | S | A | A | S | ○ | ○ |
| | 6 months | A | S | A | A | S | ○ | ○ |

It was confirmed from the above evaluation results that the softened plant materials obtained by the production method according to the embodiments of the invention maintained the original color and the original shape of the plant material, showed only a small amount of syneresis, had a soft texture and a good flavor, and contained the nutrients originally contained in the plant material, as compared with the softened plant materials produced in the comparative examples.
A hard plant material (e.g., carrot) could be sufficiently softened by the production method according to the embodiments of the invention. For example, a softened plant material having softness that cannot be implemented under excessive cooking conditions (see Comparative Example 13) can be produced to maintain the original appearance of the plant material and contain the nutrients originally contained in the plant material.
The softened plant materials maintained the original color and the original shape of the plant material, showed only a small amount of syneresis, and had a soft texture and a good flavor, even when subjected to 6-month frozen storage. It was thus confirmed that a softened plant material obtained by the production method according to the embodiments of the invention may suitably used as a food material used to produce a food for a person who has difficulty in chewing/swallowing, a person who requires nursing care, a patient in the early, middle, or late postoperative stage, an elderly person, or the like.
Since the production method according to the embodiments of the invention had a low plant material breakage rate as compared with the production method of the comparative examples, and could soften each plant material within a certain range (standard deviation of compressive stress), it was confirmed that a softened plant material can be uniformly and stably mass-produced by the production method according to the embodiments of the invention.

### INDUSTRIAL APPLICABILITY

A softened food for an elderly person, a food for a postoperative patient, a dysphagia diet, a weaning food, or the like that have good appearance, are highly nutritious, and have a good flavor can be provided in a large quantity by utilizing a softened plant material produced by the production method according to the embodiments of the invention as a food material.

## Claims

1. A method for producing a softened plant material comprising bringing a plant material into contact with a degrading enzyme, and subjecting the plant material to a decompression treatment a plurality of times so that a total decompression time is less than 12 minutes to introduce the degrading enzyme into the plant material to obtain a softened plant material.

2. The method according to claim 1, further comprising heating the softened plant material at a temperature of 70 to 120°C and a humidity of 10 to 100% for 5 to 120 minutes to inactivate the degrading enzyme.

3. The method according to claim 1 or 2, further comprising freezing the softened plant material.

4. The method according to any one of claims 1 to 3, wherein the plant material to be softened is a fresh plant material or a frozen or heated plant material.

5. The method according to any one of claims 1 to 4, wherein the degrading enzyme is a degrading enzyme that has at least one of cellulase activity, hemicellulase activity, and pectinase activity.

6. The method according to any one of claims 1 to 5, wherein the plant material is brought into contact with the degrading enzyme using an enzyme treatment solution that includes the degrading enzyme in an amount of 2 wt% or more.

7. The method according to claim 6, wherein the plant material is brought into contact with the degrading enzyme using the enzyme treatment solution in an amount of 50 wt% or less based on a weight of the plant material.

8. The method according to claim 6 or 7, wherein the enzyme treatment solution includes a disaccharide.

9. The method according to claim 8, wherein the disaccharide is trehalose.

10. The method according to any one of claims 1 to 9, wherein the softened plant material has a compressive stress of less than 2.0×10⁴ N/m² as measured in accordance with "Testing Method for Foods for People with Difficulty in Swallowing" specified in "Approval of Indication of Foods for Special Dietary Use" (Notification No. 0212001, Department of Food Safety, Pharmaceutical and Food Safety Bureau, Ministry of Health, Labour and Welfare of Japan, February 12, 2009).

11. The method according to claim 10, wherein a standard deviation of the compressive stress of the softened plant material is 5.0×10³ N/m² or less.

12. The method according to any one of claims 1 to 11, wherein a content of each nutrient in the softened plant material is 85% or more based on an original content (=100%) of each nutrient in the plant material.

13. The method according to any one of claims 1 to 12, wherein the softened plant material has been softened to have uniform hardness while maintaining an original color and an original shape of the plant material, and containing nutrients originally contained in the plant material.
